# EUROPÄISCHE PATENTANMELDUNG

(11) **EP 3 719 687 A1**
(43) Veröffentlichungstag der Anmeldung: **07.10.2020**
(21) Anmeldenummer: 19167040.5
(22) Anmeldetag: 03.04.2019
(51) Int. Cl.: G06F 21/64, H04L 9/32

(54) **VERFAHREN, AUFNAHMEGERÄT UND COMPUTERPROGRAMM ZUR VERIFIZIERUNG VON BILD- UND/ODER AUDIODATEN**

(71) Anmelder: Artemisio Alessandro Giuliano, 8633 Wolfhausen (CH)
(72) Erfinder: Artemisio Alessandro Giuliano, 8633 Wolfhausen (CH)
(74) Vertreter: EGLI-EUROPEAN PATENT ATTORNEYS

(57) **Zusammenfassung**

Das Verfahren zur Verifizierung von Bild- und/oder Audiodaten umfasst die Schritte: Aufnahme von Bild- und/oder Audiodaten über ein Aufnahmegerät (S1), Erfassung von Metadaten (S2) und Zuordnung der Metadaten zu den aufgenommenen Bild- und/oder Audiodaten (S3). Die Metadaten umfassen zumindest eine Angabe zum Standort, beispielsweise über GPS, die Höhe über Meer, die Blickrichtung von der Kamera zum Objekt, die Distanz zwischen der Kamera und dem Objekt sowie das Datum und die genaue Uhrzeit.

## Beschreibung

Die vorliegende Erfindung betrifft ein Verfahren, ein Aufnahmegerät, ein Wiedergabegerät sowie ein Computerprogramm zur Verifizierung von Bild- und/oder Audiodaten.

Durch die zunehmende Vernetzung über das Internet und damit verbundene Informationsplattformen sowie soziale Netzwerke stehen zwischenzeitlich eine nahezu unbegrenzte Anzahl von Bild- und Audiodateien zur Verfügung. Viele dieser Daten haben informativen Charakter oder stellen in anderer Form einen Inhalt dar, bei dem eine Verifizierbarkeit vor Manipulationen schützen kann. Bei Bilddateien, die nicht auf Fotodarstellungen beschränkt zu verstehen sind, sondern auch Videoaufnahmen oder anderweitige bewegte Bilder umfassen, kommt es nicht nur zur Verwendung von Bildern in einem anderen Kontext, wie beispielsweise der Nutzung von Bildern von einem Kriegsschauplatz für die Darstellung vermeintlicher Angriffe an anderen Orten, sondern auch zur Editierung von Bildern zur Diffamierung von Personen. Gleiches trifft auf Audiodaten zu. Alleine schon aufgrund der Vielzahl der verfügbaren Aufnahmedaten sowie der steigenden Qualität der zweckentfremdeten Wiedergabe ist es kaum noch möglich, Originalaufnahmen von manipulierten bzw. aus ihrem Kontext entnommenen Aufnahmen zu unterscheiden.

Die WO 2017/023896 A1 schlägt zur Authentifizierung von fotographischen Aufnahmen vor, diese mit Metadaten zu versehen, und auf einem Authentifizierungsserver, wie beispielsweise einem Blockchain-Server, zu speichern. Die Metadaten umfassen dabei Angaben zu Breiten- und Längengraden der Position der aufnehmenden Person oder des Zeitpunkts der Aufnahme. Die Metadaten dienen dazu, eine Verifizierung der Aufnahmen dann vorzusehen, wenn zwischen der Aufnahme selbst und der Übertragung auf den Authentifizierungsserver keine wesentliche räumliche oder zeitliche Differenz aufgetreten ist. Dieses Vorgehen beschränkt sich allerdings auf eine Wahrscheinlichkeitsbetrachtung hinsichtlich der Möglichkeit, zwischenzeitlich eine Datenmanipulation vornehmen zu können. Eine Verifizierung anhand der Bilddaten selbst ist hierdurch allerdings nicht möglich.

Die Aufgabe der vorliegenden Erfindung besteht daher darin, ein Verfahren, ein Aufnahmegerät und ein Computerprogramm zur Verifizierung von Bild- und/oder Audiodaten bereitzustellen, die es ermöglichen, den Ursprung der aufgenommen Daten besser verifizieren zu können.

Die Aufgabe wird gelöst durch ein Verfahren nach Anspruch 1, ein Aufnahmegerät nach Anspruch 9, ein Wiedergabegerät nach Anspruch 16 sowie ein auf einem Speichermedium gespeicherten Computerprogramm nach Anspruch 17. Weiterbildungen der Erfindung sind jeweils in den Unteransprüchen angegeben. Dabei kann das Verfahren auch durch die untenstehenden bzw. in den Unteransprüchen ausgeführten Merkmale des Aufnahmegeräts weitergebildet sein oder umgekehrt.

Dadurch, dass die Metadaten zumindest eine Angabe zum Standort, beispielsweise über GPS, die Höhe über Meer, die Blickrichtung von der Kamera zum Objekt, die Distanz zwischen der Kamera und dem Objekt sowie das Datum und die genaue Uhrzeit, umfassen, ist es möglich, die Aufnahmen objektiv zu verifizieren.

Das Aufnahmegerät kann dabei verschiedenster Gestalt sein, wie beispielsweise ein Fotoapparat, eine Videokamera, ein Smartphone und eine anderweitige Bild- und/oder Audioaufnahmeeinheit. In Bezug auf Bilddaten ist das erfindungsgemässe Aufnahmegerät auch nicht auf reale Bilder im Sinne zweidimensionaler fotographischer Aufzeichnungen beschränkt, sondern kann auch dreidimensionale Bilddaten, thermographische Bilder oder anderweitige Objektrepräsentationen umfassen. Ein Objekt ist in diesem Zusammenhang auch nicht als einzelnes Individuum oder als einzelner Gegenstand zu verstehen, sondern kann auch eine Landschaft oder allgemeine Szenerie, aber auch bei Audioaufnahmen allgemein eine Geräuschquelle sein.

Durch die Information eines Abstands zwischen einem Aufnahmegerät und einem Aufnahmeobjekt wird eine Verifizierung dadurch ermöglicht, dass eine Plausibilitätsprüfung und damit Verifizierung dahingehend ermöglicht wird, dass den Bild-und/oder Audiodaten vernünftigerweise ein Mindest- und/oder Höchstabstand und/oder auch eine Abstandsverteilung zuordenbar ist. Beispielsweise wird bei einer Landschaftsaufnahme üblicherweise ein bestimmter Mindestabstand angenommen. Dieser kann bevorzugt auch in Abhängigkeit von der Verwendung entsprechender Objektive oder diese repräsentierender Objektiveinstellungen angenommen werden. Sollte nun ein Abstand in den Metadaten diesen Mindestabstand unterschreiten, beispielsweise kleiner einem Meter, so kann nicht angenommen werden, dass es sich um eine reale Landschaftsaufnahme handelt und es steht zu vermuten, dass zuvor aufgenommene Landschaftsaufnahme nochmals aufgenommen wurde. Eine solche-Foto-von-Foto-Aufnahme kann auch vermutet werden, wenn die Angabe zum Abstand nicht einen einzelnen Abstandswert ermittelt, sondern eine Abstandswertverteilung, anhand derer erkennbar wird, dass der Aufnahmegegenstand keine Topographie, also keine dreidimensionale Ausprägung, aufweist, sondern lediglich eine zweidimensionale Fläche darstellt. Die Abstandsinformation ermöglicht eine Verifizierung in objektiver Weise.

Auch die Ausrichtung oder Orientierung des Aufnahmegeräts gegenüber dem Aufnahmeobjekt ermöglicht Aufschluss über die Wahrscheinlichkeit einer Diskrepanz zwischen vermeintlicher Aufnahme und ihrem tatsächlichen Ursprung. Sofern eine Aufnahmeeinheit des Aufnahmegeräts beispielsweise in eine andere Richtung gerichtet ist, als dies bei einer bestimmten Aufnahme anzunehmen wäre, kann nicht von einer Aufnahme realer Geschehnisse ausgegangen werden. Um hier nochmals das Beispiel der Foto-von-Fotoaufnahme zu bemühen, kann von einer solchen ausgegangen werden, wenn die Metadaten die Ausrichtung oder Orientierung in vornehmlich horizontaler Richtung angeben, wobei allerdings eine Luftaufnahme gezeigt wird, die üblicherweise einer vertikalen Ausrichtung oder zumindest vertikalen Ausrichtungsanteilen entspricht. Ebenso wie die Abstandsinformation ermöglicht die Ausrichtungs- bzw. Orientierungsinformation eine objektive Verifizierung.

Alternativ oder ergänzend kann auch eine auf ein Referenzniveau bezogene Aufnahmehöhe als Angabe in den Metadaten zur Verifizierung herangezogen werden. So ist wiederum auf einer Luftaufnahme und beispielsweise unter Heranziehung des Normalhöhennullniveaus, kurz auch N.N. oder N.H.N. genannt, eine Höhe von exemplarisch nur 10 m über dem Normalhöhennullniveau als Indiz dafür zu werten, dass es sich nicht um eine reale Luftaufnahme handelt. Auch hieraus ergibt sich eine objektive Verifizierungsoption.

Auch wenn vorstehend die Erfindung anhand von aufgenommenen Bilddaten beispielhaft erläutert wird, sind solche Überlegungen auch analog auf die Aufnahme von Audiodaten übertragbar. Insbesondere können auch hier Aufnahmeeinstellungen genutzt werden, um eine erwartbare Qualität von Aufnahmedaten mit Metadaten abzugleichen. So mag die übliche Aufnahmequalität nur bis zu einem Höchstabstand gewährleistet sein, was wiederum einer erzielten Aufnahmequalität bei Überschreitung des Höchstabstands entgegenstehen kann. Ebenso kann eine Ausrichtung oder Orientierung des Aufnahmegeräts einer Richtungskomponente des Audiosignals widersprechen. Vergleichbar unrealistisch wären auch Unterwasseraufnahmen, beispielsweise die Aufnahme von Walgesängen, auf einer Höhe von 2000 m über dem Normalhöhennullniveau.

Die Erfindung ist nicht auf die Verifizierung von entweder Bild- oder Audiodaten beschränkt, sondern kann auch Bilddaten sowie Audiodaten enthalten.

Welche Metadaten zur Verifizierung herangezogen werden, kann von der technischen Ausgestaltung des Aufnahmegeräts oder Peripheriegeräten zur Weitergabe der Metadaten abhängen oder auch in Abhängigkeit der für eine Verifizierung sinnvollen Grössen vorgegeben werden. Bevorzugt kann eine solche Vorgabe in Abhängigkeit einer Verifizierungsreferenz, wie diese später noch beschrieben wird, manuell oder automatisch eingestellt werden. Bei einer automatischen Einstellung können weitere Modifizierungsoptionen, die wiederum manuell oder programmtechnisch iterativ umgesetzt werden, vorgesehen sein. Es versteht sich, dass die Metadaten auch weitere Angaben umfassen können, die einer Plausibilitätsprüfung zur Verifizierung ergänzend zugrunde gelegt werden können. Dies können u.a. GPS-Daten und/oder Zeitangaben sein.

Die Metadaten werden entweder über das jeweilige Aufnahmegerät selbst erfasst oder durch ein Peripheriegerät bereitgestellt.

In einer bevorzugten Weiterbildung der Erfindung werden die Bild- und/oder Audiodaten mit den zugehörigen Metadaten in einem Datensatz verschlüsselt. Hierzu werden die Bild- und/oder Audiodaten mit den ihnen zugehörigen Metadaten zunächst zusammengeführt und als gemeinsamer Datensatz verschlüsselt. Alternativ werden die Bild- und/oder Audiodaten separat von den Metadaten verschlüsselt und die beiden verschlüsselten Datensätze in einem Datensatz zusammengefasst. Durch die Verschlüsselung werden die Daten vor einem unberechtigten Zugriff geschützt, um Manipulation zu verhindern. Bekannte Anbieter von Verschlüsselungstechniken sind zum Beispiel SEPPmail AG, Industriestrasse 7, CH-5432 Neuenhof und CRYPTSHARE, befine Solutions AG, Schwarzwaldstrasse 151, DE-79102 Freiburg.

Die Verschlüsselung kann dazu dienen, dass die Daten nicht mehr editierbar sind. Alternativ oder ergänzend kann die Verschlüsselung auch dazu genutzt werden, einen unberechtigten Zugriff zu verhindern. Bei letztgenanntem Beispiel ist der Zugriff auf Bild- und/oder Audiodaten nur möglich, wenn einem Nutzer zuvor Entschlüsselungsdaten zur Verfügung gestellt wurden. In der Praxis bietet sich solch ein Verfahren zum Vertrieb von Bild- und/oder Audiodaten an. Ein Zugriff bzw. eine Freigabe kann auch in mehreren Stufen erfolgen, wobei in einer ersten Stufe Bild- und/oder Audiodaten zunächst erst angezeigt werden oder zumindest teilweise abspielbar sind und in einem zweiten Schritt unter bestimmten Bedingungen, wie einer Zahlung, die Daten auch runtergeladen werden können. Zusätzlich können insbesondere Bilddaten auch mit einem Wasserzeichen versehen werden, dass erst mit weiterer Zugriffsfreigabe entfernt wird.

Bevorzugt wird der verschlüsselte Datensatz in eine Liste miteinander verketteter Datensätze aufgenommen. Insbesondere erfolgt die Aufnahme der verschlüsselten Datensätze in Form einer Blockchain. Dabei werden die Datensätze, sogenannte Blöcke, in einer kontinuierlich erweiterbaren Liste von Datensätzen mittels kryptographischer Verfahren miteinander verkettet. Die Verkettung der Datensätze enthält in jedem Block einen Wert eines vorhergehenden Blocks, insbesondere einen kryptographisch sicheren Hash. Des Weiteren können die Blöcke jeweils einen Zeitstempel oder Transaktionsdaten beinhalten, die der Nachvollziehbarkeit und/oder Verifizierung dienen. Durch diese Massnahme erhöht sich die Sicherheit nicht nur durch die kryptographische Verschlüsselung, sondern auch durch die Transparenz unter Angabe weiterer aufnahmespezifischer Details zur Verifizierung.

Ergänzend zur zumindest einen Angabe zum Abstand zwischen einem Aufnahmegerät und einen Aufnahmeobjekt, zur Orientierung bzw. Ausrichtung des Aufnahmegeräts zum Aufnahmeobjekt und/oder zur auf ein Referenzniveau bezogenen Aufnahmehöhe, insbesondere einer Höhe in Bezug auf das Normalhöhenniveau, enthalten die Metadaten zumindest eine Verifizierungsreferenz. Alternativ oder ergänzend kann die zumindest eine Verifizierungsreferenz auch dem verschlüsselten Datensatz zugeordnet werden. Die Verifizierungsreferenz ermöglicht die direkte Kategorisierung von Bild- und/oder Audiodaten in Aufnahmetypen, die mit erwartbaren Charakteristika in Verbindung gebracht werden können. Weichen nun die Metadaten von den erwartbaren Charakteristika ab, steht dies einer Verifizierung entgegen. Somit stellt eine Verifizierungsreferenz ein einfaches Mittel zur Bewertung der Metadaten dar.

Die Verifizierungsreferenz wird bevorzugt über das jeweilige Aufnahmegerät oder durch ein Peripheriegerät ermittelt und/oder bereitgestellt. In einer Variante verfügt das Aufnahmegerät beispielsweise über eine Eingabeoption zur Definition von Bildtypen, wie Luftaufnahme, Unterwasseraufnahme, Landschaftsbild, Foto-von-Foto-Aufnahme oder ähnliche mit bestimmten Metadaten in Verbindung zu bringende Aufnahmetypbezeichnungen, die somit als Verifizierungsreferenz ausgewählt werden können. Wie bereits zuvor ausgeführt, ermöglicht eine Kategorisierung die Zuordnung von Plausibilitäts- bzw. Verifizierungskriterien zur jeweiligen Kategorie. Beispielhaft sei hierzu die Einhaltung eines vorgegeben Mindest- und/oder Höchstabstands zu einem Objekt während der Aufnahme, eine Ausrichtung oder Orientierung des Aufnahmegeräts und/oder eine auf ein Referenzniveau bezogene Aufnahmehöhe erwähnt.

Durch eine Kategorisierung zur Festlegung der Verifizierungsreferenz kann bei gleichzeitiger Hinterlegung der Verifizierungskriterien eine automatisierte Verifizierung von Daten vorgenommen werden, in dem zumindest ein Verifizierungskriterium mit den Metadaten zur zumindest einen Angabe zum Abstand zwischen einem Aufnahmegerät und einem Aufnahmeobjekt, zur Orientierung bzw. Ausrichtung des Aufnahmegeräts zum Aufnahmeobjekt und/oder zur auf ein Referenzniveau bezogenen Aufnahmehöhe, insbesondere einer Höhe in Bezug auf das Normalhöhenniveau, abgeglichen wird. Beispielsweise kann bei der Vorauswahl Landschaftsaufnahme als Verifizierungsreferenz ein vorgegebener Mindestabstand als Verifizierungskriterium mit der Angabe des tatsächlichen Abstands aus den Metadaten verglichen werden. In einem anderen Beispiel werden für Luftaufnahmen als Verifizierungsreferenz ein Mindestabstand, eine Orientierung des Aufnahmegeräts nach unten, also in eine auf einen Erdoberflächenverlauf gerichtete Richtung, sowie eine Mindestaufnahmehöhe als Verifizierungskriterien herangezogen. Bevorzugt werden die Bild- und/oder Audiodaten nach ihrer Verifizierung automatisch signiert, so dass der Verifizierungsschritt dokumentiert ist. Die automatische Verifizierung erfolgt somit rein objektiv ohne Manipulationsmöglichkeiten durch manuellen Eingriff.

Auch wenn eine Automatisierung vielfach von Vorteil ist, kann eine individuelle Prüfung vorgesehen werden, um den technischen Aufwand zu reduzieren oder eine weitere Prüfungsebene einzubinden. Bei einer individuellen Prüfung werden die Metadaten als Bild- und/oder Audiodateninformation angegeben und können durch einen Nutzer individuell bewertet werden. Hierbei ist die Angabe zumindest einer Verifizierungsreferenz nicht mehr zwingend erforderlich, sofern sich Widersprüche zwischen Metadaten und Bild- und/oder Audiodaten in offensichtlicher Weise ergeben, wie bei einer Luftaufnahme während einer horizontalen Ausrichtung des Aufnahmegeräts. In vielen Fällen sind Aufnahmen jedoch nicht eindeutig durch blosse Betrachtung verifizierbar, so dass auch hier die Zuordnung zumindest einer Verifizierungsreferenz vorteilhaft ist. Im Anschluss an eine individuelle Verifizierung kann vorgesehen werden, dass die Bild- und/oder Audiodaten bzw. ihr verschlüsselter Schriftsatz signiert werden. Die Signatur dient der Dokumentation und Rückverfolgbarkeit.

In einer bevorzugten Ausgestaltung werden die Bild- und/oder Audiodaten in einer Datenbank gespeichert. Sofern eine Blockchain als Protokoll oder verteilte Datenbank nicht als Datenbank im herkömmlichen Sinne verstanden werden sollte, so ist diese hier explizit von dem Begriff Datenbank mitumfasst. Die Datenbank dient dem Zugriff auf Bild- und/oder Audiodateien. In einer Ausgestaltung sind jeweils nur die Bild-und oder Audiodaten verfügbar, die im Rahmen einer Verifizierung verifiziert werden konnten. Alternativ oder ergänzend sind aber auch die Metadaten, die zumindest eine Angabe zum Abstand zwischen Aufnahmegerät und Aufnahmeobjekt, zur Orientierung/Ausrichtung des Aufnahmegeräts zum Aufnahmeobjekt und/oder zur auf ein Referenzniveau bezogenen Aufnahmehöhe, insbesondere einer Höhe in Bezug auf das Normalhöhennullniveau, umfassen, in der Datenbank enthalten. Weiterhin alternativ und/oder ergänzend umfassen die in der Datenbank verfügbaren Metadaten oder der dort abgebildete Datensatz anwendbare oder angewandte Verifizierungsreferenzen, insbesondere unter der Angabe zumindest eines spezifischen Verifizierungskriteriums. Neben der jeweiligen Angabe von Verifizierungskriterien zu Verifizierungsreferenzen im Datensatz selbst, kann in der Datenbank auch ein allgemeines Informationsfeld zu Verifizierungskriterien bei jeweiligen Verifizierungsreferenzen hinterlegt werden. Sofern von den über das allgemeine Informationsfeld angegebenen Verifizierungskriterien Abweichungen zu berücksichtigen sind, können diese wiederum zusätzlich im Datensatz enthalten sein. Dieses Vorgehen erhöht die Flexibilität der Verifizierung.

Ferner kann den Bild- und/oder Audiodaten jeweils eine eindeutige Identität und/oder ein Zugriffsort zugewiesen werden. Die eindeutige Identität ermöglicht die zweifelsfreie Zuordnung der Bild- und/oder Audiodaten zu einem Datensatz oder auch deren Suche. Über die Angabe des Zugriffsortes ist es möglich, die Datenbank oder bei zusätzlicher Angabe der Identität auch direkt den Datensatz in der Datenbank zu identifizieren.

Bevorzugt wird die Information der eindeutigen Identität und/oder des Zugriffsorts den Bild- und/oder Audiodaten oder dem dazugehörigen verschlüsselten Datensatz als QR-Code oder photoTAN zugeordnet. Der QR-Code und photoTAN sind weit verbreitet und bieten sich aufgrund einfacher Umsetzungsmöglichkeiten an. Weitere Code-Formate oder Angabeformen sind denkbar.

In einer bevorzugten Ausgestaltung wird die Identität und/oder den Zugriffsort repräsentierende Information, wie beispielsweise der QR-Code, zusammen mit den Bild- und/oder Audiodateien wiedergegeben. Werden beispielsweise Bilder in einem Nachrichtenformat, also einer Fernsehsendung oder auch in einem Online-Beitrag, gezeigt, so kann der Nachrichtenempfänger als Zuschauer oder Leser die Quelleninformation auslesen und auf die Datenbank zugreifen, um eigenständig eine Verifizierung vornehmen oder prüfen zu können. Gerade wenn die Bild- und/oder Audiodaten nicht für sich alleine wiedergegeben werden, sondern in Verbindung mit weiteren Daten- und/oder Wiedergabeinhalten stehen, besteht die Möglichkeit, dass die die Identität und/oder den Zugriffsort repräsentierende Information verdeckt oder zumindest nicht vollständig zugänglich ist oder zur Freihaltung der Information aufwändige Massnahme ergriffen werden müssen. Daher ist in einer Ausgestaltung vorgesehen, dass die die Identität und/oder den Zugriffsort repräsentierende Information separiert vom Wiedergabebereich der Bild- und/oder Audiodaten anzeigbar ist. Beispielsweise kann die Information in einer im jeweiligen Format standardmässig vorgesehenen Fussleiste eingeblendet werden, die üblicherweise keine Störobjekte oder Überblendungen aufweist.

Das erfindungsgemässe Aufnahmegerät zur Aufnahme zu verifizierender Bild- und/oder Audiodaten umfasst eine Aufnahmeeinheit zur Aufnahme von Bild- und/oder Audiodaten sowie eine Erfassungseinheit zur Erfassung von Metadaten auf, wobei die Erfassungseinheit zur Erfassung zumindest einer Angabe zum Abstand zwischen Aufnahmegerät und Aufnahmeobjekt, zur Orientierung/Ausrichtung des Aufnahmegeräts zum Aufnahmeobjekt und/oder zur auf ein Referenzniveau bezogenen Aufnahmehöhe, insbesondere einer Höhe in Bezug auf das Normalhöhennullniveau, ausgebildet ist.

Die Aufnahmeeinheit wird durch die zur Aufnahme der Bild-und/oder Audiodaten genutzten Komponenten gebildet und kann insofern nur ein Teilsystem des Aufnahmegeräts bilden, sofern dieses über mehr Funktionalitäten verfügt.

Die Erfassungseinheit zur Erfassung von Metadaten kann sowohl auf die Erfassung qualitativer als auch quantitativer Daten gerichtet sein. Im Falle der Erfassung einer Angabe zum Abstand zwischen Aufnahmegerät und Aufnahmeobjekt kann es sich beispielsweise um einen Entfernungsmesser handeln, der entweder konkrete Abstandswerte erfasst oder aber auch nur angibt, ob sich ein Objekt innerhalb eines vorbestimmten Abstands befindet. Eine Ausrichtungs- oder Orientierungserfassung kann über Neigungssensoren oder auch Beschleunigungssensoren realisiert werden. Zur Bestimmung der Aufnahmehöhe kann die Erfassungseinheit Daten auf Basis barometrischer, trigonometrischer oder nivellitischer Verfahren bestimmen. Bevorzugt wird die Aufnahmehöhe anhand von GPS-Daten erfasst, wie Sie bereits zur Ausübung anderer Funktionen in Aufnahmegeräten, insbesondere Smartphones und Tablets, bereits genutzt werden.

Die Erfassungseinheit muss die jeweiligen Daten jedoch nicht zwangsläufig selbst bestimmen, sondern kann auch als Erfassungseinheit im Sinne einer Empfangseinheit ausgebildet sein, um über Peripheriegeräte ermittelte Daten zu empfangen.

Das Aufnahmegerät verfügt bevorzugt über eine Einrichtung zur Verschlüsselung der Bild- und/oder Audiodaten mit den dazugehörigen Metadaten. Hierzu kann auf dem Aufnahmegerät ein entsprechendes Programm lokal implementiert sein. Alternativ greift das Aufnahmegerät hierzu auf externe Programme, wie eine Cloud-Anwendung oder webbasierte Dienste, zu. Die Daten werden als verschlüsselter Datensatz generiert, bei dem entweder die Bild- und/oder Audiodaten zusammen mit den Metadaten verschlüsselt oder die Bild- und/oder Audiodaten separat von den Metadaten verschlüsselt und beide verschlüsselten Datenformen in dem verschlüsselten Datensatz zusammengeführt werden.

Bevorzugt ist ein somit verschlüsselter Datensatz in eine Liste miteinander verketteter Datensätze, insbesondere in eine Blockchain, aufnehmbar und/oder in eine solche Liste übertragbar. Sofern der verschlüsselte Datensatz in eine solche Liste des Aufnahmegeräts aufgenommen wird, werden die Datensätze dort lokal gesichert. Der Zugriff auf lokal gesicherte Daten kann restriktiv ausgeführt werden. Alternativ oder ergänzend kann aber auch eine Übertragung der verschlüsselten Datensätze in externe Listen bzw. Datenbanken vorgesehen werden. Dies bietet sich u.a. unten Datensicherungsaspekten oder auch hinsichtlich der aufzubringenden Speicherkapazitäten an. Insbesondere verfügen webbasierte Informationsplattformen über vielfältige Verbreitungsmöglichkeiten.

In einer weiteren Ausgestaltung umfasst das Aufnahmegerät eine Verifizierungsreferenzeinheit, durch die den Metadaten und/oder dem verschlüsselten Datensatz zumindest eine Verifizierungsreferenz zugeordnet werden kann. Bevorzugt weist das Aufnahmegerät hierzu qualitative und/oder quantitative Eingabemöglichkeiten auf. Beispielweise kann die Verifizierungsreferenz Luftaufnahme, Unterwasseraufnahme, Landschaftsbild o.ä. über einen Touch-Screen oder andere Eingabeeinrichtungen eingegeben werden. Bevorzugt ist die Verifizierungsreferenz aber auch an eine Aufnahmevoreinstellung, wie Landschaft, Porträt o.ä., gebunden oder zumindest als Default-Einstellung bei entsprechender Auswahl der Aufnahmevorstellung hinterlegt sein. Insbesondere sollte für eine Verifizierung von Bild- und/oder Audioaufnahmen eine Aufnahmemöglichkeit nur gegeben sein, wenn eine Verifizierungsreferenz ausgewählt wurde. So kann bei fehlender Auswahl einer Verifizierungsreferenz die Aufnahmefunktion blockiert oder der Nutzer über eine ggf. zu bestätigende Mitteilung auf einem Display des Aufnahmegeräts darüber informiert werden, dass eine Verifizierung der Bild- und/oder Audiodaten nicht oder nur noch eingeschränkt möglich ist.

Bevorzugt umfasst das Aufnahmegerät eine Verifizierungseinheit, durch die die Bild- und/oder Audiodaten über die zumindest eine Verifizierungsreferenz verifizierbar sind. In der Verifizierungseinheit ist hierzu zumindest ein Verifizierungskriterium in Abhängigkeit der zumindest einen Verifizierungsreferenz hinterlegt. Dies wird dazu genutzt, die qualitative oder quantitative Erfüllung des zumindest einen Verifizierungskriteriums anhand der Metadaten zu prüfen und bei Erfüllung die Verifizierung anzugeben. Beispielsweise werden Bilddaten verifiziert, wenn als Verifizierungskriterium eine Luftaufnahme vorgegeben wurde, der Abstand zwischen Aufnahmegerät und Aufnahmeobjekt beispielsweise im Fall eines Kleinflugzeugs zwischen 1500 m und 3000 m liegt und/oder das Aufnahmegerät eine in Richtung Erde weisende Richtungskomponente aufweist und/oder die Aufnahmehöhe bei einer geographischen Höhe des Aufnahmeobjekts von beispielsweise 700 m über Normalhöhennullniveau über 2200 m bzw. zwischen 2200 m und 3700 m liegt. Anhand dieses Beispiels wird auch deutlich, dass auch noch weitere Metadaten zur Verifizierung herangezogen werden können, wie weitere GPS-Daten, die dazu genutzt werden können, die Höhe des Aufnahmeobjekts aufgrund seiner geographischen Lage zu bestimmen, um daraus die zur Verifizierung heranzuziehende Aufnahmehöhe in Bezug auf ein Referenzniveau abzuleiten. Ebenso ist hieraus ersichtlich, dass neben dem Normalhöhennullniveau auch direkt die geographische Höhe des Aufnahmeobjekts herangezogen werden kann. Anhand des Beispiels wird aber auch deutlich, dass eine Verifizierungsreferenz alleine oder im Sinne des Umfassens von nur einem Sachverhalt nicht ausreichend sein muss, da sich übliche Flughöhen je nach Art des Flugobjekts unterscheiden können. Entsprechend können in einer Verifizierungsreferenz auch mehrere Charakteristika geclustert oder die Verifizierung durch Auswahl mehrerer Verifizierungsreferenzen konkretisiert werden.

In einer Ausgestaltung umfasst das Aufnahmegerät zudem eine Identifizierungseinheit, durch die den Bild- und/oder Audiodaten oder dem verschlüsselten Datensatz eine eindeutige Identität und/oder ein Zugriffsort, insbesondere als QR-Code, zugeordnet werden kann. Die Identifizierungseinheit stellt somit eine Einrichtung dar, über die eine Identität der Daten und/oder ein Zugriffsort auf diese Daten identifizierbar ist. Dies ermöglicht die Zuordenbarkeit der Bild- und/oder Audiodaten bzw. deren Suche, insbesondere in Verbindung mit der hierfür zu nutzenden Datenbank. Besonders bevorzugt kann hierüber der verschlüsselte Datensatz direkt in der jeweiligen Datenbank aufgerufen oder zumindest angezeigt werden. Ein direkter Aufruf ist beispielsweise durch Anklicken eines Links möglich. Um aber auch einen Aufruf entsprechender Daten bei einer nicht aktiven Oberfläche, wie bei einer Nachrichtenübertragung auf einem Fernsehgerät, zu ermöglichen, wird den Bild- und/oder Audiodaten oder dem verschlüsselten Datensatz bevorzugt ein graphischer Code, insbesondere ein QR-Code, zugeordnet, der dann eingespielt und über eine Scan- oder sonstige Leseeinheit, beispielsweise über eine Smartphone-Funktion, ausgelesen werden kann.

Bevorzugt weist das Aufnahmegerät eine Zugriffssperre auf, um eine aufnahmegerätseitige Manipulation der Bild- und/oder Audiodaten zu verhindern. Die Zugriffsperre kann gegenständlich in Form eines Siegels ausgebildet werden. Dadurch wird visuell erkennbar, dass ein unberechtigter Zugriff zu vermuten ist. Alternativ oder ergänzend kann die Zugriffssperre derart gestaltet sein, dass bei ihrer Öffnung das Aufnahmegerät keine Bild- und/oder Audiodaten mehr aufnehmen kann. Beispielsweise wird durch öffnen der Zugriffssperre ein für die Funktionsausübung erforderlicher Kontakt gelöst oder Schalter umgelegt. Da jedoch vielfach eine Manipulation der Ausführungsprogramme des Aufnahmegeräts ohne physischen Zugriff auf das Aufnahmegerät erfolgen kann, kann alternativ oder ergänzend eine programmtechnische Zugriffssperre vorgesehen werden. Zur Zugriffssperre auf die Programme zur Aufnahme von Bild- und/oder Audiodaten, den Programmen zur Erfassung von Metadaten, der Programmen zur Zusammenführung und Verschlüsselung von Bild- und/oder Audiodaten sowie den Programmen zur Übertragung in eine aufnahmegerätseitige und/oder externe Datenbank bzw. Datensatzliste können diese verschlüsselt oder durch andere Sicherheitsmechanismen, wie Zugriffsberechtigungsverwaltung, beispielsweise über Registrierungen und Passwortvergabe, und/oder ausschliesslichen Offline-Betrieb, geschützt werden.

In diesem Zusammenhang ist erfindungsgemäss auch ein Wiedergabegerät zur Wiedergabe von Bild- und/oder Audiodaten derart vorgesehen, dass eine die Identität und/oder den Zugriffsort von Bild- und/oder Audiodaten repräsentierende Information von diesen Daten separiert wiedergebbar ist. Gerade bei Nachrichtensendungen werden Bilddateien häufig nur im Hintergrund wiedergegeben und dadurch ggf. durch den Nachrichtensprecher oder die Nachrichtensprecherin partiell verdeckt. Audiodaten werden zumeist generell ohne weitere symbolische Anzeige abgespielt. Daher kann über die separate Wiedergabe der die Identität und/oder den Zugriffsort von Bild- und/oder Audiodaten repräsentierende Information der Zugriff auf diese Information verbessert werden.

Die vorliegende Erfindung richtet sich zudem auf ein auf einem Speichermedium gespeicherten Computerprogramms zur Verifizierung von Bild- und/oder Audiodaten gemäss des erfindungsgemässen Verfahrens, insbesondere wenn dieses in einem erfindungsgemässen Aufnahmegerät implementiert ist.

Weitere Merkmale und Zweckmässigkeiten der Erfindung ergeben sich aus der Beschreibung von Ausführungsbeispielen anhand der beigefügten Zeichnungen.
- Fig. 1: Ablauf-Diagramm einer Ausführungsform zur Durchführung des erfindungsgemässen Verfahrens.
- Fig. 2: Schematische Ansicht einer Ausführungsform eines erfindungsgemässen Aufnahmegeräts.
- Fig. 3: Schematische Ansicht einer Ausführungsform eines erfindungsgemässen Wiedergabegeräts.

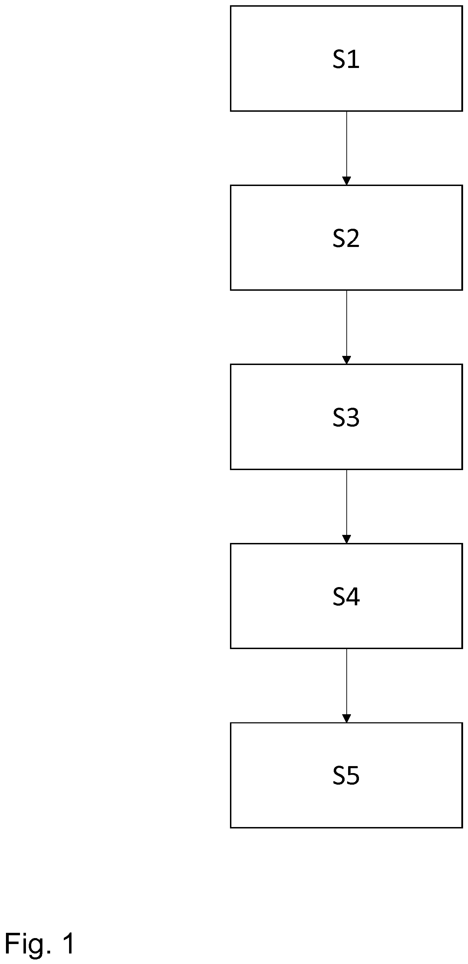

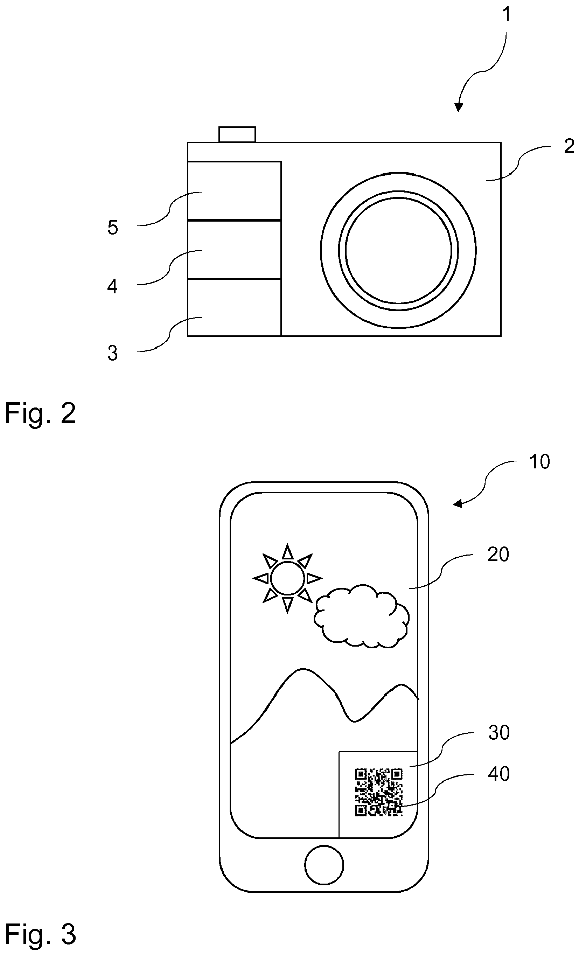

Gemäss des Ablaufdiagramms in Figur 1 zum Verfahren zur Verifizierung von Bild und/oder Audiodaten werden im Schritt S1 Bild- und/oder Audiodaten über ein Aufnahmegerät 1 (Fig. 2) aufgenommen. In einem Schritt S2 werden Metadaten erfasst, die zumindest eine Angabe zum Standort, beispielsweise über GPS, die Höhe über Meer, die Blickrichtung von der Kamera zum Objekt, die Distanz zwischen der Kamera und dem Objekt sowie das Datum und die genaue Uhrzeit umfassen. Auch wenn das Ablaufdiagramm einen seriellen Ablauf der Schritte S1 und S2 zeigt, können die Bild- und/oder Audiodaten und die Metadaten auch parallel aufgenommen bzw. erfasst werden. Bei einer seriellen Abfolge ist bevorzugt ein definierter Zeitraum, innerhalb dessen die Schritte S1 und S2 auszuführen sind, vorzugeben, um den Zusammenhang zwischen den Bild- und/oder Audiodaten zu den Metadaten sicherstellen zu können. Die serielle Abfolge der Schritte S1 und S2 ist dabei auch nicht auf die dargestellte Reihenfolge beschränkt, sondern es können auch zunächst die Metadaten erfasst werden, bevor Bild- und/oder Audiodaten aufgenommen werden. In einem Schritt S3 werden die Metadaten dann den aufgenommenen Bild- und/oder Audiodaten zugeordnet. Das hier gezeigte Ablaufdiagramm umfasst zudem gemäss einer Weiterbildung der Erfindung die Verschlüsselung der Bild- und/oder Audiodaten mit den dazugehörigen Metadaten in einem Datensatz in einem Schritt S4. Der verschlüsselte Datensatz kann dann gemäss Schritt S5 in eine Liste miteinander verketteter Datensätze, insbesondere in eine Blockchain, aufgenommen werden.

Figur 2 zeigt ein Beispiel eines Aufnahmegeräts 1 zur Aufnahme zu verifizierender Bild- und/oder Audiodaten. Hierzu umfasst das Aufnahmegerät 1 eine Aufnahmeeinheit 2, hier eine Kamera 2 zur Aufnahme von Bilddaten. Die Kamera 2 weist zudem eine Erfassungseinheit 3 zur Erfassung von Metadaten auf, wobei die Erfassungseinheit 3 auch eine separate Einheit sein kann, die die erfassten Metadaten an die Kamera 2 überträgt. Die Erfassungseinheit ist hier ein GPS-Gerät, das den Standort der Kamera 2 erfasst. Neben der Erfassung des Standorts kann die Erfassungseinheit alternativ oder ergänzend auch weitere Metadaten, wie eine Höhe über dem Meer, die Blickrichtung von der Kamera 2 zum Objekt, die Distanz zwischen der Kamera 2 und dem Objekt oder das Datum und die Uhrzeit erfassen.

Die Kamera 2 verfügt zudem in der gezeigten Ausführungsform über eine Verschlüsselungseinheit 4 zur Verschlüsselung der Bilddaten mit den dazugehörigen Metadaten, hier beispielsweise dem über GPS ermittelten Standort. Auch hier kann die Verschlüsselungseinheit 4 separat ausgebildet sein, wobei die zu verschlüsselnden Bilddaten dann von der Kamera 2 an die Verschlüsselungseinheit gesendet oder anderweitig übertragen werden.

Weiter umfasst die Kamera 2 nach Figur 2 eine Verifizierungsreferenzeinheit 5, durch die den Metadaten und/oder dem verschlüsselten Datensatz zumindest eine Verifizierungsreferenz zugeordnet werden kann. Vergleichbar zur Verschlüsselungseinheit 4 kann auch die Verifizierungsreferenzeinheit 5 als separate Einheit bereitgestellt werden.

Das in Figur 3 gezeigte Wiedergabegerät 10 zu Wiedergabe von Bild- und/oder Audiodaten umfasst ein Display 20 mit einem Wiedergabebereich 30 zur Wiedergabe einer die Identität und/oder den Zugriffsort repräsentierenden Information 40, hier einem QR-Code 40. Bei Verfügbarkeit der Information 40 kann diese permanent anzeigbar sein oder bei Bedarf aktivierbar bzw. deaktivierbar sein. Der Wiedergabebereich 30 muss zudem nicht in seiner Grösse und Position fest vorgegeben sein, sondern kann auch in seiner Grösse veränderbar und/oder verschiebbar ausgebildet sein. Der QR-Code 40 oder auch eine andere Informationsdarstellungsform, wie eine photoTAN, kann über ein Lesegerät ausgelesen und/oder über die Wiedergabeeinheit selbst verarbeitet werden.

Auch wenn die vorliegende Erfindung anhand verschiedener Ausführungsbeispiele beschrieben wurde, ist sie hierauf nicht beschränkt. So kann beispielsweise im Fall einer Thermographie-Kamera als Verifizierungsreferenz auch eine spezifische Anwendungsvorgabe gemacht werden, aus der sich anwendungsspezifische Temperaturangaben herleiten lassen, durch die ein Mindestabstand, bei dessen Unterschreitung aufgrund zu hoher Temperaturen in diesem Bereich eine Schädigung der Thermographie-Kamera angenommen werden müsste, verifizierbar ist.

## Patentansprüche

1. Verfahren zur Verifizierung von Bild- und/oder Audiodaten, umfassend die Schritte:
- Aufnahme von Bild- und/oder Audiodaten über ein Aufnahmegerät (S1),
- Erfassung von Metadaten (S2) und
- Zuordnung der Metadaten zu den aufgenommenen Bild-und/oder Audiodaten (S3)
**dadurch gekennzeichnet, dass**
die Metadaten zumindest eine Angabe zum Standort, beispielsweise über GPS, die Höhe über Meer, die Blickrichtung von der Kamera zum Objekt, die Distanz zwischen der Kamera und dem Objekt sowie das Datum und die genaue Uhrzeit umfassen.

2. Verfahren nach Anspruch 1, **dadurch gekennzeichnet, dass** die Bild- und/oder Audiodaten mit den zugehörigen Metadaten in einem Datensatz verschlüsselt werden (S4), wobei der verschlüsselte Datensatz bevorzugt in eine Liste miteinander verketteter Datensätze, insbesondere in eine Blockchain, aufgenommen wird (S5).

3. Verfahren nach Anspruch 1 oder 2, **dadurch gekennzeichnet, dass** die Metadaten zumindest eine Verifizierungsreferenz umfassen und/oder dem verschlüsselten Datensatz zumindest eine Verifizierungsreferenz zugeordnet wird.

4. Verfahren nach Anspruch 3, **dadurch gekennzeichnet, dass** die Bild- und/oder Audiodaten über die zumindest eine Verifizierungsreferenz verifiziert werden.

5. Verfahren nach einem der Ansprüche 1 bis 4, **dadurch gekennzeichnet, dass** die Bild- und/oder Audiodaten in einer Datenbank, insbesondere einer webbasierten Datenbank, bevorzugt zusammen mit den Metadaten und/oder Verifizierungsreferenzen, gespeichert werden.

6. Verfahren nach einem der Ansprüche 1 bis 5, **dadurch gekennzeichnet, dass** den Bild- und/oder Audiodaten oder dem verschlüsselten Datensatz eine eindeutige Identität und/oder ein Zugriffsort, insbesondere als QR-Code oder photoTAN, zugeordnet wird, wobei bevorzugt eine die Identität und/oder den Zugriffsort repräsentierende Information bei einer Wiedergabe der Bild- und/oder Audiodaten angezeigt wird, insbesondere separiert von dem Wiedergabebereich der Bild- und/oder Audiodaten.

7. Aufnahmegerät (1) zur Aufnahme zu verifizierender Bild-und/oder Audiodaten, umfassend:
- eine Aufnahmeeinheit (2) zur Aufnahme von Bild-und/oder Audiodaten,
- sowie eine Erfassungseinheit (3) zur Erfassung von Metadaten,
**dadurch gekennzeichnet, dass**
die Erfassungseinheit zur Erfassung zumindest einer Angabe zum Standort, beispielsweise über GPS, die Höhe über Meer, die Blickrichtung von der Kamera zum Objekt, die Distanz zwischen der Kamera und dem Objekt sowie das Datum und die genaue Uhrzeitausgebildet ist.

8. Aufnahmegerät (1) nach Anspruch 7, **dadurch gekennzeichnet, dass** das Aufnahmegerät (1) zur Verschlüsselung der Bild- und/oder Audiodaten mit den dazugehörigen Metadaten ausgebildet ist.

9. Aufnahmegerät (1) nach Anspruch 8, **dadurch gekennzeichnet, dass** der verschlüsselte Datensatz in eine Liste miteinander verketteter Datensätze, insbesondere in eine Blockchain, aufnehmbar und/oder in eine solche Liste übertragbar ist.

10. Aufnahmegerät (1) nach einem der Ansprüche 7 bis 9, **dadurch gekennzeichnet, dass** das Aufnahmegerät (1) eine Verifizierungsreferenzeinheit (5) umfasst, durch die den Metadaten und/oder dem verschlüsselten Datensatz zumindest eine Verifizierungsreferenz zugeordnet werden kann.

11. Aufnahmegerät (1) nach Anspruch 10, **dadurch gekennzeichnet, dass** das Aufnahmegerät (1) eine Verifizierungseinheit umfasst, durch die die Bild- und/oder Audiodaten über die zumindest eine Verifizierungsreferenz verifizierbar sind.

12. Aufnahmegerät (1) nach einem der Ansprüche 7 bis 11, **dadurch gekennzeichnet, dass** das Aufnahmegerät (1) eine Identifizierungseinheit umfasst, durch die den Bild-und/oder Audiodaten oder dem verschlüsselten Datensatz eine eindeutige Identität und/oder ein Zugriffsort, insbesondere als QR-Code oder photoTAN, zugeordnet werden kann.

13. Aufnahmegerät (1) nach einem der Ansprüche 7 bis 12, **dadurch gekennzeichnet, dass** das Aufnahmegerät (1) eine Zugriffssperre umfasst.

14. Wiedergabegerät (10) zur Wiedergabe von Bild- und/oder Audiodaten, **dadurch gekennzeichnet, dass** eine die Identität und/oder den Zugriffsort von Bild- und/oder Audiodaten repräsentierende Information (40) von diesen Daten separiert wiedergebbar ist.

15. Auf einem Speichermedium gespeichertes Computerprogramm zur Verifizierung von Bild- und/oder Audiodaten nach einem Verfahren gemäss einem der Ansprüche 1 bis 6, insbesondere wenn dieses in einem Aufnahmegerät gemäss einem der Ansprüche 7 bis 13 implementiert ist.
